# EUROPÄISCHE PATENTSCHRIFT

(11) **EP 4 193 822 B1**
(45) Veröffentlichungstag und Bekanntmachung des Hinweises auf die Patenterteilung: **01.07.2026**
(21) Anmeldenummer: 22211757.4
(22) Anmeldetag: 06.12.2022
(51) Int. Cl.: A01B 79/00, G06Q 50/02

(54) **KARTIERUNG VON ANGELEGTEN SCHÄCHTEN BEI PKV-MASSNAHMEN ZUR DOKUMENTATION UND ZUR GRUNDLAGE EINES ABRECHNUNGSSYSTEMS FÜR DEN CO2-HANDEL**
MAPPING OF SHAFT IN PKV MEASURES FOR DOCUMENTATION AND AS THE BASIS OF AN ACCOUNTING SYSTEM FOR CO2 TRADING
CARTOGRAPHIE DES PUITS DANS LES MESURES PKV POUR LA DOCUMENTATION ET COMME BASE D'UN SYSTÈME DE COMPTABILITÉ POUR LE COMMERCE DE CO2

(30) Priorität: 07.12.2021 DE 102021132195
(43) Veröffentlichungstag der Anmeldung: 14.06.2023
(73) Patentinhaber: Lemken GmbH & Co KG, 46519 Alpen (DE)
(72) Erfinder: Fröming, Fabian, 01445 Radebeul (DE); Eirmbter, Sebastian, 47877 Willich (DE)

(56) Entgegenhaltungen:
- WO-A1-2021/214557
- DD-A1- 227 866
- DE-A1- 102017 105 493
- US-A1- 2012 089 304

## Beschreibung

Die vorliegende Erfindung betrifft ein Verfahren zur Erfassung einer partiellen Krumenvertiefungsmaßnahme sowie ein Bodenbearbeitungsgerät in Form eines Pfluges.

In der Landwirtschaft werden Pflüge üblicherweise zu einer Wendung und Lockerung des Bodens nach einer vorangegangenen Bearbeitung eingesetzt, wobei dies zeitlich versetzt oder zusammen in Kombination mit anderen Bodenbearbeitungsgeräten erfolgen kann. Der Boden wird dabei im Wesentlichen ganzheitlich gelockert, gemischt und organische Reststoffe nahezu gleichmäßig eingearbeitet. Zur Ertragssteigerung wurden in der Vergangenheit Versuche mit Pflügen unternommen, mit welchen lediglich streifenweise Schächte mit einigem Abstand auf dem Acker angelegt werden konnten, um so eine Verdichtung des Unterbodens durch schwere Landtechnik zu verringern. Diese Schächte durchbrechen vorhandene Verdichtungszonen und ermöglichen so dem Wurzelsystem einen ungehinderten Zugang zu Wasser und den Nährstoffen. Ein derartiger Pflug zur nachhaltigen Beseitigung von Krumenbasisverdichtungen ist beispielsweise aus der DD 227866 A1 bekannt, wobei schachtbildende Werkzeuge, die mit speziellen Schachtfüllerwerkzeugen ausgerüstet sind, mit Standardpflugkörpern im Wechsel an einem mehrteiligen Rahmen des Pfluges angeordnet werden.

Durch die Form und Anordnung der Pflugkörper wird humusarmer Unterboden in den Oberboden eingemischt, wobei durch die Einmischung von nährstoffarmem Unterboden in den Oberboden die Anreicherung von C und N im Boden neu gestartet wird. Diese Krumenverdünnung schafft ein großes Kohlenstoffbindungspotential im Boden (engl. Soil Carbon Sequestration, SCS). Eine Erfassung und Auswertung von Treibhausgasemissionen in landwirtschaftlichen Anwendungen ist zwar aus der US 8504252 B2 bekannt, eine Erfassung von, insbesondere durch partielle Krumenvertiefungsmaßnahmen, in den Boden eingebrachten Kohlenstoffs ist jedoch nicht möglich.

Es ist daher die Aufgabe der vorliegenden Erfindung, ein Verfahren und eine Vorrichtung bereitzustellen, welches es ermöglicht, nachweisbar eine zusätzliche und dauerhafte Einbringung von Kohlenstoff, insbesondere von CO2, auf einem Acker zu erfassen und zu dokumentieren.

Diese Aufgabe wird durch das Verfahren nach Anspruch 1 sowie ein Bodenbearbeitungsgerät nach Anspruch 9 gelöst. Vorteilhafte Ausgestaltungen der Erfindung ergeben sich aus den Unteransprüchen.

Ein Verfahren zur Erfassung einer partiell krumenvertiefenden Maßnahme zur Einbringung von Kohlenstoff, insbesondere CO2, in den Boden umfasst das Identifizieren eines schachtbildenden Bodenbearbeitungsgeräts für die durchzuführende Maßnahme, die Bestimmung eines Startpunktes der Maßnahme und, insbesondere kontinuierliche, Aufzeichnung und Speicherung von Daten, insbesondere Positionsangaben, der durchgeführten Maßnahme, die Bestimmung eines Endpunktes der Maßnahme und beenden der Erfassung der Maßnahme, und die Erstellung einer Dokumentation basierend auf den aufgezeichneten und gespeicherten Daten, insbesondere der Positionsangaben.

Das Verfahren ermöglicht eine zusätzliche und dauerhafte Einbringung von Kohlenstoff, insbesondere von CO2, auf einem Acker zu erfassen und beispielsweise in einer Schlagdatei und/oder als Rohdaten, insbesondere der Positionsangaben, zu dokumentieren. Die Erfassung und Dokumentation dieser Maßnahmen bietet den Vorteil, dass durch wiederholte Durchführung der Maßnahmen eine vollständige Nutzung des Kohlenstoffspeicherungspotentials des Bodens ermöglicht wird.

Vorzugsweise wird zur Bestimmung des Startpunktes der Maßnahme erfaßt, ob das Bodenbearbeitungsgerät abgesenkt wird, und wobei zur Bestimmung des Endpunktes der Maßnahme erfaßt wird, ob das Bodenbearbeitungsgerät ausgehoben wird. Hierbei kann das Bodenbearbeitungsgerät so weit abgesenkt werden, dass für die hinterlegten Geräteparameter eine partielle Krumenvertiefung möglich ist. Entsprechend kann bei der Bestimmung des Endpunktes ein Ausheben des Bodenbearbeitungsgerätes ausreichend sein, bei dem eine partielle Krumenvertiefung bei den hinterlegten Geräteparametern nicht mehr möglich ist. Die Bearbeitungsgeräteparameter können zu Beginn des Verfahrens eingegeben oder aus einem Speicher abgerufen werden. Ein Absenken und/oder Ausheben des Bodenbearbeitungsgerätes kann durch ein Hubwerk erfolgen. Im Zusammenhang mit der vorliegenden Erfindung kann ein Hubwerk zum Absenken und Ausheben des Bodenbearbeitungsgeräts, ein Teil des Bodenbearbeitungsgeräts sein aber nicht muss. Insbesondere ist ein Heckkraftheber eines das Bodenbearbeitungsgerät schleppenden Traktors ein Hubwerk in diesem Sinne. Durch diese Art der Bestimmung des Startpunktes und Endpunktes der Maßnahme kann eine sehr genaue Bestimmung der Anfangs- und Endpositionen der generierten Schächte ermöglicht werden.

In einer besonders bevorzugten Ausgestaltung der Erfindung umfaßt die Erstellung der Dokumentation eine grafische Aufbereitung der erfassten Daten zu einer Karte mit den generierten Schächten. Die grafische Aufbereitung kann dabei das Hinzufügen von genauen Positionsangaben an den generierten Schächten umfassen, wodurch beispielsweise eine ausgedruckte Karte noch viele Jahre später genutzt werden kann, um beispielsweise die Koordinaten der Start und Endpunkte von Schächten in ein neues elektronisches Gerät einzugeben. Dies bietet den Vorteil, dass durch veraltete elektronische Hardware keine Datenverluste auftreten.

In einer weiteren Ausgestaltung der Erfindung wird basierend auf den aufgezeichneten und gespeicherten Daten berechnet, welche Menge an Oberboden, der sogenannten Ackerkrume, dauerhaft in die Schächte in tieferen Bodenschichten, die sogenannte Krumenbasis, eingebracht wurde. Dies kann beispielsweise in Form einer Berechnung des Verbrachten Bodenvolumens erfolgen, wobei ein Volumen je Schacht anhand eine Schachtlänge und des Schachtquerschnitts berechnet werden kann, basierend auf den Pflugkörperdaten des Bodenbearbeitungsgerätes. Hierdurch kann zunächst quantifiziert werden, welches Erdvolumen eingebracht wurde.

In einer besonders bevorzugten Ausgestaltung der Erfindung wird basierend auf den aufgezeichneten und gespeicherten Daten, insbesondere auf dem in die Schächte verfüllten Volumen an Oberboden, eine Menge an Kohlenstoff, insbesondere CO2, ermittelt wird, welche zusätzlich und dauerhaft in den Boden verbracht wurde. Hierbei können zudem Umweltspezifische Daten wie beispielsweise eine Bewuchssituation des Feldes, ein Feuchtegehalt des Bodens oder eine Mächtigkeit der Ackerkrume berücksichtigt werden.

In einer besonders bevorzugten Ausgestaltung der Erfindung wird basierend auf der ermittelten Kohlenstoffmenge, insbesondere CO2-Menge, ein Zertifikat über die Durchführung der Maßnahme generiert wird. Hierbei wird aufgrund der erfassten Daten eine sehr genaue Angabe zu dem zusätzlich und dauerhaft in den Boden eingebrachten Kohlenstoff, insbesondere CO2, ermöglicht. Ein derartiges Zertifikat über eine durchgeführte Maßnahme zur Kohlenstoffbindung im Boden kann eine Teilnahme beispielsweise am CO2-Handel ermöglichen.

In einer weiteren besonders bevorzugten Ausgestaltung der Erfindung werden bereits erfasste und gespeicherte Daten einer vorherigen partiellen Krumenvertiefungsmaßnahme aufgerufen. Hierbei können die Positionsangaben zur Lage der Schächte und/oder eine Anzeige der Schächte in einer Karte dargestellt werden. Die bereits erfassten und gespeicherten Daten früherer Maßnahmen könnten auch unmittelbar in ein Routenplanungsgerät geladen werden. Dies bietet den Vorteil, dass auch nach Jahren, zu den bereits vorhandenen Schächten parallele, an die alten Schächte anschließende neue Schächte, geplant und dann erzeugt werden können. Mit Hilfe der gespeicherten Daten können die Schächte bei einer erneuten Durchführung einer partiellen Krumenvertiefungsmaßnahme genau versetzt und parallel zu den Vorhandenen angelegt werden, wodurch ein Kohlenstoffbindungspotential des Bodens nahezu vollständig genutzt werden kann.

In einer weiteren bevorzugten Ausgestaltung der Erfindung umfassen die erfaßten und gespeicherten Daten Informationen zum Zeitpunkt und Umfang der Durchführung der Maßnahme, bodenbearbeitungsgerätspezifische und umweltspezifische Daten. Die Informationen können beispielsweise das Datum, sowie Uhrzeiten zu Beginn, Dauer und/oder Ende der Maßnahme umfassen. Zudem kann die genaue Anfangsposition und Endposition jedes Schachtes hinterlegt sein, insbesondere als allgemein gültige Positionsdaten, sowie eine im Wesentlichen kontinuierlich erfasste Lage der Schächte. Bodenbearbeitungsspezifische Daten können neben dem Typ des Bodenbearbeitungsgerätes eine genaue Anzahl und Art an verbauten Pflugkörpern, deren Arbeitsbreite, Arbeitstiefe und Schnittbreiten sein. Umweltspezifische Daten können beispielsweise eine Bewuchssituation des Feldes, ein Feuchtegehalt des Bodens, eine Mächtigkeit der Ackerkrume sowie Angaben zu Bodenqualität und/oder Ackerzahl des Feldes sein. Dies Daten ermöglichen eine verbesserte Genauigkeit bei der Bestimmung des tatsächlich dauerhaft und zusätzlich in den Boden eingebrachten Kohlenstoffs, insbesondere CO2.

Ein erfindungsgemäßes Bodenbearbeitungsgerät, insbesondere ein Drehpflug zur partiellen Krumenvertiefung, umfasst ein Hubwerk und eine Positionsbestimmungseinrichtung sowie Mittel, die geeignet sind, die Schritte des oben ausgeführten Verfahrens durchzuführen. Bei dem Mittel kann es sich insbesondere um eine Steuerung oder eine allgemeine EDV-Vorrichtung handeln. Es ist möglich, dass das Bodenbearbeitungsgerät ferner Sensoren zum Erfassen einer Hubwerksposition, einer Vorwärtsgeschwindigkeit und/oder einer Bodenfreiheit aufweist. Bevorzugt ist das Bodenbearbeitungsgerät dazu geeignet, auf Grundlage des ISOBUS/J1939 Bus-Systems mit einem Traktor zu kommunizieren und unter anderem diese Information auf diese Weise vom Traktor zu erhalten. Das Bodenbearbeitungsgerät kann mit eigener Steuerung ausgestattet sein, um das Verfahren durchzuführen. Das Verfahren kann an Anbaudrehpflügen, Anbauschwenkpflügen, Aufsatteldrehpflügen und anderen asymmetrischen Anbaugeräten, die bei einer Fahrtrichtungsumkehr einen Wende-/Dreh- oder Verschiebvorgang benötigen (z.B. auch an Hanglagen) besonders vorteilhaft eingesetzt werden. Für Anbaugeräte ohne eigene Elektronik, kann das Verfahren auch auf einem Trägerfahrzeug bzw. Traktor als Funktion integriert werden. Durch diese Erfindung ist eine verbesserte Speicherung von Kohlenstoff, insbesondere CO2, im Boden möglich.

Weitere Vorteile und Weiterbildungen der Erfindung ergeben sich aus der nachfolgenden Figurenbeschreibung und der Gesamtheit der Ansprüche.
- Fig. 1: zeigt ein Flussdiagramm eines bevorzugten Verfahrens zum Erfassen einer partiellen Krumenvertiefungsmaßnahme,
- Fig. 2: zeigt eine schematische Darstellung eines Schnittes durch einen Feldboden mit darin generierten Schächten, und
- Fig. 3: zeigt eine vereinfachte Draufsicht auf ein Feld mit bereits angelegten Schächten und geplanten Schächten.

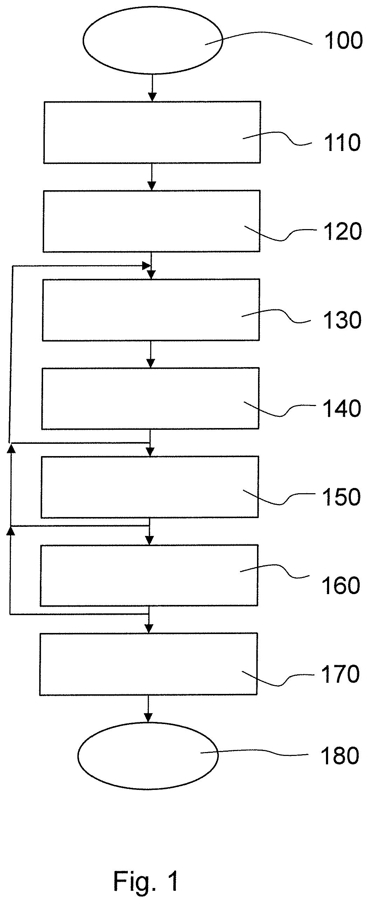

Fig. 1 zeigt ein Flussdiagramm eines bevorzugten Verfahrens zum Erfassen einer partiellen Krumenvertiefungsmaßnahme. Das bevorzugte Verfahren kann von einem Bediener aktiviert werden, kann aber auch deaktiviert bleiben. Im deaktivierten Zustand wird das Verfahren nicht durchgeführt. Im aktivierten Zustand, nach dem Start 100 können in einem ersten Schritt 110 Daten vorheriger partiell krumenvertiefender Maßnahmen beispielsweise aus einem Speicher abgerufen werden, sofern Daten für das zu bearbeitende Feld vorliegen. Hierbei können die erfassten und gespeicherten Daten in Form einer Schlagdatei hinterlegt sein. Von besonderem Interesse können hierbei die Positionsdaten zur genauen Lage der bereits angelegten Schächte sein, wodurch eine unmittelbar an diese anschließende Planung neuer Schächte ermöglicht wird, so dass das volle Kohlenstoffspeicherungspotential des Feldes genutzt werden kann.

Durch die Auswahl 120 des für die anstehende partiell krumenvertiefende Maßnahme benötigte Bodenbearbeitungsgerätes werden die gerätespezifischen Daten für die weiteren Schritte des Verfahrens geladen. Diese gerätespezifischen Daten können beispielsweise eine Anzahl an tiefarbeitenden Pflugkörpern, deren genauen Abmessungen, Arbeitsbreiten und Arbeitstiefen sein, wodurch die Genauigkeit der später im Verfahren ermittelten Daten verbessert werden kann. Ein Arbeitsbeginn der Maßnahme, der Start 130, kann durch ein Absenken des Bodenbearbeitungsgerätes erfasst werden, bei der das Bodenbearbeitungsgerät in einer Tiefe arbeitet, welche für eine partiell krumenvertiefende Maßnahme notwendig ist. Anhand der gerätespezifischen Daten und beispielsweise Daten eines Hubwerks zum Absenken und/oder Ausheben des Gerätes kann die notwendige Tiefe für den Arbeitsbeginn ermittelt werden. Während der Maßnahme werden, insbesondere kontinuierlich, Daten zur Position, Arbeitstiefe und dergleichen erfaßt und gespeichert. Sobald ein Ende 140 eines neu erstellten Schachtes erreicht ist, kann das Bodenbearbeitungsgerät ausgehoben werden, wobei das Arbeitsende erreicht ist, wenn das Bodenbearbeitungsgerät so weit ausgehoben ist, dass für die gegebenen gerätespezifischen Parameter keine parteill krumenvertiefende Bodenbearbeitung mehr möglich ist. Falls in einem Vorgewende gedreht und weiter Schächte erzeugt werden, startet die Erfassung und Speicherung weiterer Daten bei erneutem, hinreichenden Absenken des Bodenbearbeitungsgerätes erneut.

Basierend auf den erfassten und gespeicherten Daten der Maßnahme erfolgt eine grafische Aufbereitung 150 oder Kartierung der erzeugten Schächte. Hierbei kann eine grafische Aufbereitung nach jeder Maßnahme bzw. Schacht erfolgen, während der Maßnahme oder ganz am Ende der Maßnahme, wenn alle gewünschten Schächte erzeugt wurden. Aus den ermittelten und gespeicherten Daten, beispielsweise einer Länge der erzeugten Schächte und deren Querschnitte, kann ein Volumen des dauerhaft in den Unterboden, die Krumenbasis, eingebrachten Obermaterials ermittelt werden. Basierend hierauf wird die in den Boden eingebrachte Menge an Kohlenstoff, insbesondere CO2, ermittelt 160. Durch eine Zertifizierung 170 kann zum Ende 180 des Verfahrens eine durchgeführte partiell krumenvertiefende Maßnahme zur dauerhaften und zusätzlichen Speicherung von Kohlenstoff, insbesondere CO2, im Boden belegt werden.

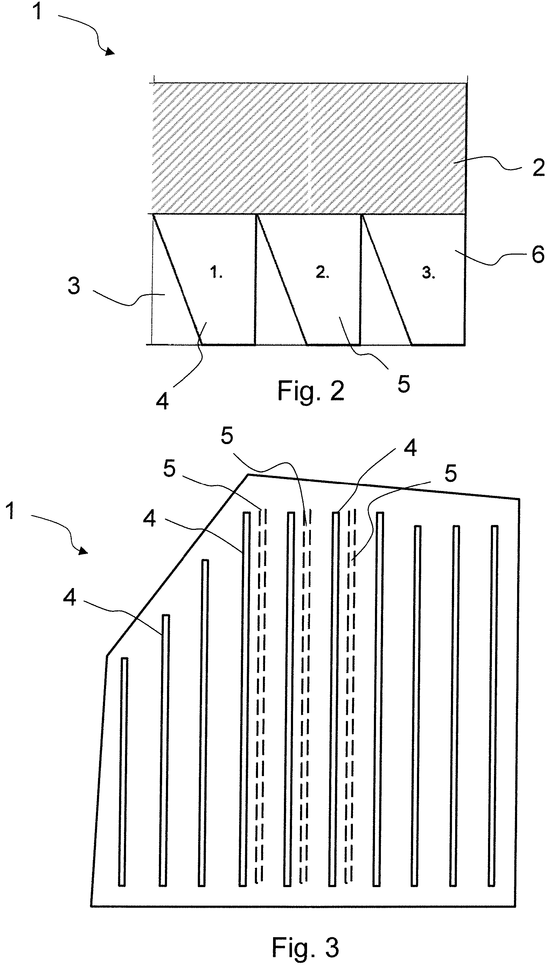

Figur 2 zeigt eine geschnittene Darstellung eines Feldes 1 mit der oberseitigen Ackerkrume 2 und der darunter angeordneten Krumenbasis 3. Durch die partielle Krumenvertiefung werden Schächte 4, 5, 6 in der Krumenbasis gebildet und der Boden aus der Krumenbasis nach oben transportiert. Gleichzeitig wird ein Teil des Oberbodens von der Ackerkrume 2 in die darunterliegende, tiefere Krumenbasis 3 gefördert. Bei der partiellen Krumenvertiefung werden die Ackerkrume 2 und die Krumenbasis 3 schachtweise vertieft, wobei Festzonen zwischen den Schächten 4, 5, 6 erhalten bleiben. Die üblicherweise im Wechsel mit normalen Pflugkörpern angeordneten schachtbildenden Pflugkörper (nicht dargestellt) reichen tiefer als die Standardpflugkörper und vertiefen die Krume beispielsweise im Abstand von 75 cm. Mit einem Meißelschar wird ein annähernd trapezförmiger Schacht erzeugt, welcher durch ein nachfolgendes Breitfurchenmesser mit Oberbodenmaterial verfüllt werden kann. Aufgrund der Arbeitsbreite würde in Figur 2 bei einer Überfahrt lediglich ein Schacht, beispielsweise der erste Schacht 4, erzeugt und verfüllt. Die genaue Ermittlung der Lage der Schächte 4, ermöglicht zu einem späteren Zeitpunkt, beispielsweise nach 5 bis 10 Jahren, die Herstellung eines zweiten Schachte 5, welcher genau an den ersten Schacht 4 anschließt und parallel zu diesem verlaufen kann. In Figur 3 ist in einer Draufsicht ein Feld mit bereits vorhandenen Schächten 4 dargestellt. Aufgrund der erfassten und gespeicherten Daten der Erzeugung der ersten Schächte 4, können die zweiten Schächte 5 präzise neben und entlang der ersten Schächte gezogen werden. Hierdurch ist eine annähernd vollständige Nutzung des Kohlenstoffspeicherpotentials sowie eine zusätzliche, nachweisbare und dauerhafte CO2 Speicherung im Boden möglich.

### Bezugszeichen

- 1: Feld
- 2: Ackerkrume
- 3: Krumenbasis
- 4: Erster Schacht
- 5: Zweiter Schacht
- 6: Dritter Schacht

- 100: Start
- 110: Aufrufen von Daten vorheriger Maßnahmen
- 120: Identifizieren eines schachtbildenden Bodenbearbeitungsgerätes
- 130: Bestimmung eines Startpunktes und Datenerfassung
- 140: Bestimmung eines Endpunktes und Dokumentation
- 150: Grafische Aufbereitung
- 160: Ermittlung des Kohlenstoffgehaltes
- 170: Erstellung eines Zertifikates
- 180: Ende

## Patentansprüche

1. Verfahren zur Erfassung einer partiell krumenvertiefenden Maßnahme zur Einbringung von Kohlenstoff, insbesondere CO2, in den Boden umfassend
- Identifizieren eines schachtbildenden Bodenbearbeitungsgeräts für die durchzuführende Maßnahme,
- Bestimmung eines Startpunktes der Maßnahme und, insbesondere kontinuierliche, Aufzeichnung und Speicherung von Daten, insbesondere Positionsangaben, der durchgeführten Maßnahme,
- Bestimmung eines Endpunktes der Maßnahme und Beenden der Erfassung der Maßnahme, und
- Erstellung einer Dokumentation basierend auf den aufgezeichneten und gespeicherten Daten, insbesondere der Positionsangaben, wobei zur Bestimmung des Startpunktes der Maßnahme erfasst wird, ob das Bodenbearbeitungsgerät abgesenkt wird, und wobei zur Bestimmung des Endpunktes der Maßnahme erfasst wird, ob das Bodenbearbeitungsgerät ausgehoben wird.

2. Verfahren nach Anspruch 1, wobei die Erstellung der Dokumentation eine grafische Aufbereitung der erfassten Daten zu einer Karte mit den generierten Schächten umfasst.

3. Verfahren nach Anspruch 1 oder 2, wobei basierend auf den aufgezeichneten und gespeicherten Daten berechnet wird, welche Menge an Oberboden dauerhaft in die Schächte in tieferen Bodenschichten eingebracht wurde.

4. Verfahren nach einem der vorherigen Ansprüche, wobei basierend auf den aufgezeichneten und gespeicherten Daten, insbesondere auf dem in die Schächte verfüllten Volumen an Oberboden, eine Menge an CO2 ermittelt wird, welche zusätzlich und dauerhaft in den Boden verbracht wurde.

5. Verfahren nach einem der vorherigen Ansprüche, wobei basierend auf der ermittelten Kohlenstoffmenge, insbesondere CO2-Menge, ein Zertifikat über die Durchführung der Maßnahme generiert wird.

6. Verfahren nach einem der vorherigen Ansprüche, wobei bereits erfasste und gespeicherte Daten einer vorherigen partiellen Krumenvertiefungsmaßnahme aufgerufen werden.

7. Verfahren nach einem der vorherigen Ansprüche, wobei die erfassten und gespeicherten Daten Informationen zum Zeitpunkt und Umfang der Durchführung der Maßnahme, bodenbearbeitungsgerätspezifische und umweltspezifische Daten umfassen.

8. Bodenbearbeitungsgerät, insbesondere ein Drehpflug zur partiellen Krumenvertiefung, umfassend ein Hubwerk und eine Positionsbestimmungseinrichtung sowie Mittel, die geeignet sind, die Schritte des Verfahrens nach einem der Ansprüche 1 bis 7 durchzuführen.

## Claims

1. A method for recording a partially topsoil-deepening measure for introducing carbon, in particular CO₂, into the ground comprising
- identifying a shaft-forming soil cultivation device for the measure to be carried out,
- determining a starting point of the measure and, in particular, continuous recording and storing of data, in particular, position information of the measure carried out,
- determining an end point of the measure and terminating the recording of the measure, and
- creating documentation based on the recorded and stored data, in particular, the position information, wherein for determining the starting point of the measure it is recorded whether the soil cultivation device is lowered and wherein for determining the end point of the measure it is recorded, whether the soil cultivation device is raised.

2. The method according to Claim 1, wherein the creation of the documentation includes a graphical preparation of the recorded data into a map with the shafts generated.

3. The method according to Claim 1 or 2, wherein based on the recorded and stored data, the quantity of topsoil that has been permanently introduced into the shafts in deeper soil layers.

4. The method according to any one of the preceding claims, wherein based on the recorded and stored data, in particular on the volume of topsoil filled into the shafts, a quantity of CO₂ is determined which was additionally and permanently introduced into the ground.

5. The method according to any one of the preceding claims, wherein based on the determined carbon quantity, in particular CO₂ quantity, a certificate regarding the implementation of the measure is generated.

6. The method according to any one of the preceding claims, wherein already recorded and stored data of a previous partial topsoil-deepening measure are accessed.

7. The method according to any one of the preceding claims, wherein the recorded and stored data at the time and extent of the implementation of the measure, include soil cultivation device-specific and environment-specific data.

8. A soil cultivation device, in particular, a reversible plough for the partial topsoil-deepening, including a lifting mechanism and a position-determining device as well as means which are suitable for carrying out the steps of the method according to any one of the Claims 1 to 7.

## Revendications

1. Procédé, destiné à détecter une action d'enfouissement partiel visant à introduire du carbone, notamment du CO₂, dans le sol, comprenant
- l'identification d'un appareil de travail du sol formant des puits pour l'action à réaliser,
- la détermination d'un point de départ de l'action et notamment l'enregistrement et la mémorisation en continu de données, notamment des indications de position de l'action réalisée,
- la détermination d'un point final de l'action et l'achèvement de la détection de l'action et
- l'établissement d'une documentation sur la base des données enregistrées et mémorisées, notamment des indications de position, pour déterminer le point de départ de l'action étant détecté si l'appareil de travail du sol est abaissé et pour déterminer le point final de l'action étant détecté si l'appareil de travail du sol est relevé.

2. Procédé selon la revendication 1, l'établissement de la documentation comprenant une préparation graphique des données détectées en une carte montrant les puits générés.

3. Procédé selon la revendication 1 ou 2, sur la base des données enregistrées et mémorisées étant calculée la quantité de sol supérieur qui a été introduite de manière durable dans les puits dans des couches de sol plus profondes.

4. Procédé selon l'une quelconque des revendications précédentes, sur la base des données enregistrées et mémorisées, notamment du volume de sol supérieur chargé dans les puits étant déterminée une quantité de CO₂, laquelle a été amenée de manière additionnelle et durable dans le sol.

5. Procédé selon l'une quelconque des revendications précédentes, sur la base de quantité de carbone déterminée, notamment de la quantité de CO₂, étant généré un certificat concernant la réalisation de l'action.

6. Procédé selon l'une quelconque des revendications précédentes, des données déjà détectées et mémorisées d'une action d'enfouissement partiel précédente étant interrogées.

7. Procédé selon l'une quelconque des revendications précédentes, les données détectées et mémorisées comprenant des informations concernant le moment et l'étendue de la réalisation de l'action, des données spécifiques à l'appareil de travail du sol et des données spécifiques à l'environnement.

8. Appareil de travail du sol, notamment une charrue réversible, destinée à un enfouissement partiel, comprenant un mécanisme de levage et un système de détermination de la position, ainsi que des moyens qui sont aptes à réaliser les étapes du procédé selon l'une quelconque des revendications 1 à 7.
